# EUROPEAN PATENT APPLICATION

(11) **EP 1 553 799 A2**
(43) Date of publication of application: **13.07.2005**
(21) Application number: 05000239.3
(22) Date of filing: 07.01.2005
(51) Int. Cl.: H04Q 7/38

(54) **Access information generating device, access information generating method and receiver device**

(30) Priority: 07.01.2004 JP 2004002337
(71) Applicant: NTT DoCoMo, Inc., Tokyo 100-6150 (JP)
(72) Inventor: Suzuki, Takashi, 11-1, Nagatacho 2-chome Chiyoda-ku Tokyo (JP); Yoshimura, Takeshi, 11-1, Nagatacho 2-chome Chiyoda-ku Tokyo (JP)
(74) Representative: HOFFMANN - EITLE

(57) **Abstract**

An access information generating device included in a server system providing service information includes a determiner (111) configured to determine an access network to be used by a receiver device receiving the service information and a generator (112) configured to generate access information so as to receive the service information. The access information includes access network specification information, which specifies the access network determined by the determiner, and reference information, which identifies the service information.

## Description

### CROSS REFERENCE TO RELATED APPLICATIONS

This application is based upon and claims the benefit of priority from prior Japanese Patent Application P2004-002337 filed on January 7, 2004; the entire contents of which are incorporated by reference herein.

### BACKGROUND OF THE INVENTION

### 1. Field of the Invention

The present invention relates to an access information generating device, an access information generating method and a receiver device.

### 2. Description of the Related Art

These days, the emergence of second and third generation cellular communication networks as well as a wireless LAN and the like has been diversifying access networks. In addition, communication speeds and communication cost and the like are different from one access network to another. Along with this, communication terminal devices have become available, which include a plurality of communication means corresponding to different access networks. On the other hand, with regard to service information to be transmitted and received between communication terminal devices, categories and volume are different from one another.

### SUMMARY OF THE INVENTION

For these reasons, it is preferable that communication means of a receiver device receiving service information be selected in response to the service information to be transmitted and received. Conventional receiver devices have searched for a communication speed for communication means which the receiver devices can use, thereby selecting a communication means suitable for receiving service information (for example, see Japanese Patent Laid-open Official Gazette No. 2003-8681).

However, receiver devices heretofore have connected themselves to access networks by use of communication means which have been selected by themselves. For this reason, when service information is intended to be provided to a receiver device, a server system providing the service information has been unable to contribute to selecting an access network.

The present invention has been made with the aforementioned points taken into consideration. An object of the present invention is to provide an access information generating device and an access information generating method which enable a server system for providing service information to easily specify to a receiver device an access network to be used by the receiver device receiving the service information. In addition, another object of the present invention is to provide a receiver device which can receive the service information through an access network which has been determined by the server system for providing the service information.

To achieve the object, a first aspect of the present invention is to provide an access information generating device included in a server system providing service information, which contains: a determiner configured to determine an access network to be used by a receiver device receiving the service information; and a generator configured to generate access information so as to receive the service information. Here, the access information includes access network specification information, which specifies the access network determined by the determiner, and reference information, which identifies the service information.

According to the access information generating device of the first aspect, the determiner determines an access network to be used by the receiver device receiving the service information. The generator generates access information including access network specification information for specifying the access network determined by the determiner. Thereby, the access network specification information constitutes a part of the access information. In addition, such an access information generating device is included in the server system. This enables the server system to easily specify to the receiver device the access network to be used by the receiver device receiving service information.

Further, in the access information generating device according to the first aspect, the determiner may determine the access network based on attribute information of the service information.

According to the access information generating device, the determiner determines the access network to be used by the receiver device receiving the service information, on a basis of the attribute information of the service information. This enables the server system to specify the access network to be used by the receiver device receiving service information, depending on the service information.

The access information generating device according to the first aspect may further contain a condition obtainer configured to obtain a condition on the receiver device including at least one of a specification specifying the access network, which the receiver device is capable of using for receiving the service information, and a specification specifying the access network, which the receiver device requests for use to receive a service information. Here, the determiner determines the access network based on a condition on the receiver device obtained by the condition obtainer.

According to the access information generating device, a condition obtainer obtains a condition on the receiver device and the determiner determines the access network based on a condition on the receiver device obtained by the condition obtainer. For this reason, in the case where a condition on the receiver device includes a specification for specifying an access network which the receiver device is capable of using, the determiner can determine an access network which the receiver device is necessarily capable of using. In addition, in the case where a condition on the receiver device includes a specification for specifying an access network which the receiver device requests to be used for receiving service information, the determiner can take into consideration not only the request from the server system but also the request from the receiver device.

The access information generating device according to the first aspect may further contain a storage configured to store the reference information and the generator may generate the access information including the reference information obtained from the storage.

According to the access information generating device, the access information generating device can store the reference information. This makes it easy for the access information generating device to generate access information.

A second aspect of the present invention is to provide a method to be executed by a server system providing service information for generating an access information, which contains: determining an access network to be used by a receiver device receiving the service information; and generating access information so as to receive the service information. Here, the access information includes access network specification information, which specifies the determined access network, and reference information, which identifies the service information.

A third aspect of the present invention is to provide a receiver device, which contains: a plurality of communication interfaces corresponding to a plurality of access networks; and an access information obtainer configured to obtain access information so as to receive service information from a server system providing the service information. Here, the access information includes access network specification information, which specifies the access network to be used for receiving the service information, and reference information, which identifies the service information; and a service information obtainer configured to obtain the service information via the access network specified by the access network specification information included in the access information obtained by the access information obtainer.

According to the receiver device, the access information obtainer obtains access information from the server system providing the service information. In addition, the service information obtainer obtains service information through a communication interface corresponding to the access network specified by the access network specification information included in the access information. This enables the receiver device to request and receive the service information by use of the access network specified by the server system.

The receiver device according to the third aspect may further contain a notifier configured to notify the server system of a condition on the receiver device including at least one of a specification specifying the access network, which the receiver device is capable of using for receiving the service information and a specification specifying the access network, which the receiver device requests for use to receive the service information.

According to the receiver device, the notifier notifies the server system of a condition on the receiver device, so that, the receiver device is able to have the server system specify an access network with a request from the receiver device also taken into consideration.

### BRIEF DESCRIPTION OF DRAWINGS

Fig. 1 is a block diagram showing a configuration of a communication system according to a first embodiment of the present invention.
Fig. 2 is a block diagram showing a configuration of a communication controller according to the first embodiment of the present invention.
Fig. 3A is a diagram showing an example of describing access network specification information as attribute value of the URL.
Fig. 3B is a diagram showing an example of describing access network specification information as attribute value of the CRID.
Fig. 4A is a diagram showing an example of describing the access network specification information by expanding a syntax rule to be used for the HTML.
Fig. 4B is another diagram showing an example of describing the access network specification information by expanding a syntax rule to be used for the HTML.
Fig. 5 is a block diagram showing a configuration of a content receiver device according to the first embodiment of the present invention.
Fig. 6 is a flowchart showing a procedure of an access information generating method according to the first embodiment.
Fig. 7 is a block diagram showing a configuration of a content receiver device according to a second embodiment.
Fig. 8 is a block diagram showing a configuration of a communication controller according to the second embodiment.
Fig. 9 is a flowchart showing a procedure of an access information generating method according to the second embodiment.
Fig. 10 is a block diagram showing a configuration of a communication controller according to a third embodiment.
Fig. 11 is a flowchart showing a procedure of an access information generating method according to the third embodiment.
Fig. 12 is a block diagram showing a configuration of a content receiver device according to a fourth embodiment.
Fig. 13 is a flowchart showing a procedure of an access information generating method according to the fourth embodiment.
Fig. 14 is a block diagram showing a configuration of a content receiver device according to a fifth embodiment.
Fig. 15 is a flowchart showing a procedure of an access information generating method according to the fifth embodiment.
Fig. 16 is a diagram showing an example of access information described by use of a switch function of the SMIL.

### (FIRST EMBODIMENT)

### (COMMUNICATION SYSTEM)

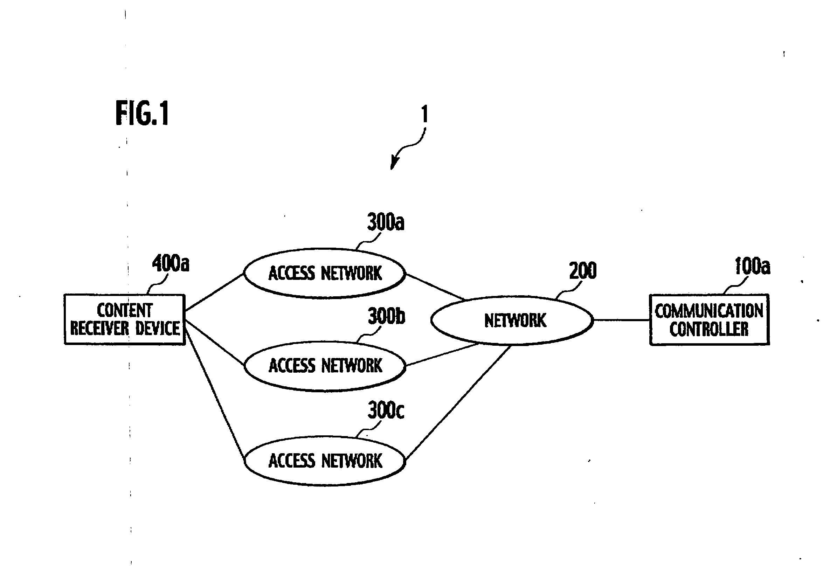

As shown in Fig. 1, a communication system 1 includes a communication controller 100a, a network 200, a plurality of access networks 300a to 300c, and a content receiver device 400a. Content is service information which the communication controller 100a provides to the content receiver device 400a. The content is, for example, a text, an image or an application. Reference information is information for identifying service information.

The content receiver device 400a is a receiver device receiving content. The content receiver device 400a uses any one of a plurality of access networks 300a to 300c, and connects itself to the network 200, thereby receiving content. The communication controller 100a is an access information generating device for generating access information, which includes access network specification information and reference information for identifying content. The access network specification information is information for specifying an access network to be used by the content receiver device 400a receiving the content. In addition, the communication controller 100a provides the content receiver device 400a with the generated access information. Furthermore, the communication controller 100a provides content through the specified access network and a network 200. In this manner, the communication controller 100a functions as a server system for providing content by itself. For this reason, the communication controller 100a is included in the server system.

The access networks 300a to 300c are networks to which the content receiver device 400a connects itself. The access networks 300a to 300c are cable or wireless networks to be connected to the network 200. The access networks 300a to 300c are, for example, a mobile phone network such as the third generation mobile network, a wireless LAN and the Ethernet (a registered trade mark) network. The network 200 is a network for connecting each of the access networks 300a to 300c with the communication controller 100a. The network 200 is, for example, the Internet.

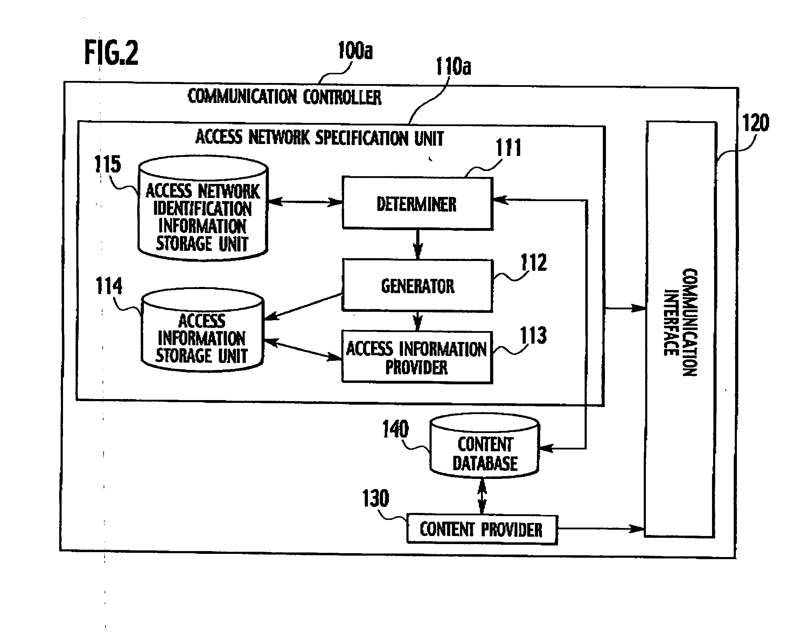

Detailed descriptions will be provided below for the communication controller 100a and the content receiver device 400a. As shown in Fig. 2, the communication controller 100a includes an access network specification unit 110a, a communication interface 120, a content provider 130, and content database 140. The communication interface 120 is connected with the content receiver device 400a through the network 200 and the access networks 300a to 300c. The content database 140 is a storage for storing reference information for identifying content. In addition, the content database 140 also stores content attribute information and the content. The content attribute information is, for example, a volume of the content, information concerning the content, a sales price of the content, a degree of importance of the content, a security level to be required for transmission of the content, or acceptable communication costs for providing the content. The reference information for identifying content is information needed for obtaining service information. The reference information is, for example, the URL (Uniform Resource Locator) and the CRID (Contents Reference Identifier). When the URL is used, the service information is identified by the address information. When the CRID is used, the service information is identified by address information to be introduced from the CRID. The access information includes the reference information and the access network specification information.

An access network identification information storage unit 115 stores information used to identify the access networks 300a to 300c. The information with which to identify the access networks 300a to 300c is, for example, the IDs of the respective access networks 300a to 300c and the types of networks. This access network identification information can be information to be agreed upon between the communication controller 100a and the content receiver device 400a, and can be included in the access network specification information.

The access network specification unit 110a includes a determiner 111, a generator 112, an access information provider 113, an access information storage unit 114 and an access network identification information storage unit 115. The determiner 111 determines an access network to be used by the content receiver device 400a receiving content. The determiner 111 obtains content attribute information which has been stored in the content database 140. In this occasion, the determiner 111 also obtains reference information which has been stored in the content database 140. In addition, the determiner 111 obtains access network identification information which has been stored in the access network identification information storage unit 115. Subsequently, the determiner 111 determines an access network based on the content attribute information which has been acquired. The determiner 111 specifies one or more access networks corresponding to functions of the content receiver device 400a. According to the present embodiment, the content receiver device 400a does not include the function of selecting an access network. For this reason, the determiner 111 specifies a single access network. The determiner 111 inputs into the generator 112 the reference information which has been obtained from the content database 140 and the access network identification information concerning the access network which has been determined by the determiner 111.

The determiner 111 determines an access network by use of, for example, criteria which will be described below. The determiner 111 determines an access network with a higher security level in response to content which require prevention of unauthorized access. The determiner 111 determines an access network which has a faster communication speed, and which charges a lower unit communication fee, in response to a larger volume of content. The determiner 111 determines an access network which charges a lower unit communication fee, for example, in order to check communication costs in response to content whose sales unit price is lower. The determiner 111 selects an access network which has a larger coverage in response to content which have a higher degree of importance. The coverage means a geographical range which enables a content receiver device 400a to use an access network.

The generator 112 generates access information to be used for receiving content including the access network specification information for specifying the access network which has been determined by the determiner 111 and the reference information for identifying the content. From the determiner 111, the generator 112 obtains the access network identification information concerning the access network which has been determined by the determiner 111. In addition, the generator 112 obtains the reference information for identifying content from the content database 140 through the determiner 111. The generator 112 generates access information which includes the access network specification information and the reference information for identifying the content.

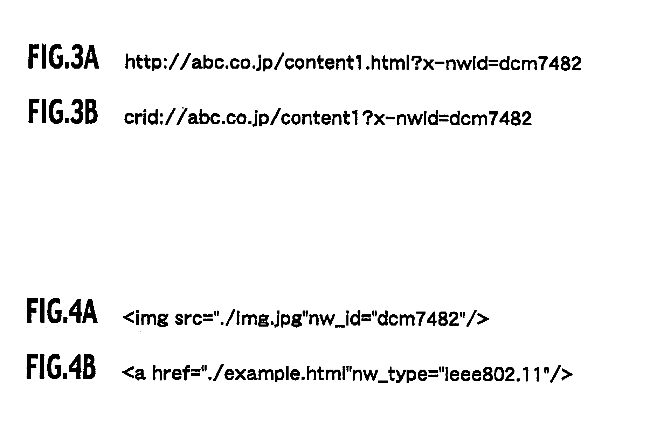

The access information is described by use of, for example, the URL and the CHID. Fig. 3A shows an example of a description of access information by use of the URL. The URL such as "http://abc.co.jp/contentl. html" is reference information for identifying content. An attribute value of the URL such as "x·nwid=dcm7482" is access network specification information. In addition, Fig. 3B shows an example of a description of access network specification information by use of the CRID. The CRID such as "crid://abc.co.jp/content1" is reference information for identifying content, and "x-nwid=dcm7482" which is listed as an attribute value of the CRID is access network specification information. Accordingly, access information can be included in a file made up of only the URL or the CRID which includes access network specification information as an attribute value. Furthermore, the URL and the CRID may be parts of a file which is described by use of the HTML (Hyper Text Markup Language) or the SMIL (Synchronized Multimedia Integration Language).

Moreover, the generator 112 expands a description scheme which is used in the HTML so that the description scheme is provided with an attribute representing an ID of an access network and a type of the access network, thereby enabling the access network specification information to be described as a property value. In this case, the access network specification information is described as a property value representing the property, which is on the same level with the URL or the CRID. With regard to an access network being specified by use of its ID and being determined thereafter, Fig. 4A shows an example of a description of the determined access network, as an attribute value of a property expressed by "nwID," by the generator 112. In the case of an access network being specified according to network types, Fig. 4B shows an example of a description of the determined access network, as an attribute value of a property expressed by "nwType," by the generator 112. As shown by these examples, the generator 112 may describe access network specification information as an attribute value of an property which is on the same level with the URL or the CRID. In this case, neither the URL nor the CRID includes the access network specification information as a property value. Incidentally, such access information is termed as meta data. The meta data is information for explaining content. The meta data includes, for example, a volume, a title and a theme of the content in addition to the access information.

The generator 112 stores the generated access information in the access information storage unit 114. Incidentally, instead of storing access information, the generator 112 may generate access information depending on necessity. In this case, the access network specification unit 110a does not have to include the access information storage unit 114. The access information storage unit 114 stores access information which has been generated by the generator 112.

The access information provider 113 is an access information providing means for providing access information, which has been generated by the generator 112, to the content receiver device 400a. The access information provider 113 provides access information, which has been obtained from the generator 112, to the content receiver device 400a through the communication interface 120. In addition, the access information provider 113 can also transmit to the content receiver device 400a access information which has been stored by the access information storage unit 114. The content provider 130 is a service information providing means for providing content in response to a request from the content receiver device 400a based on the access information.

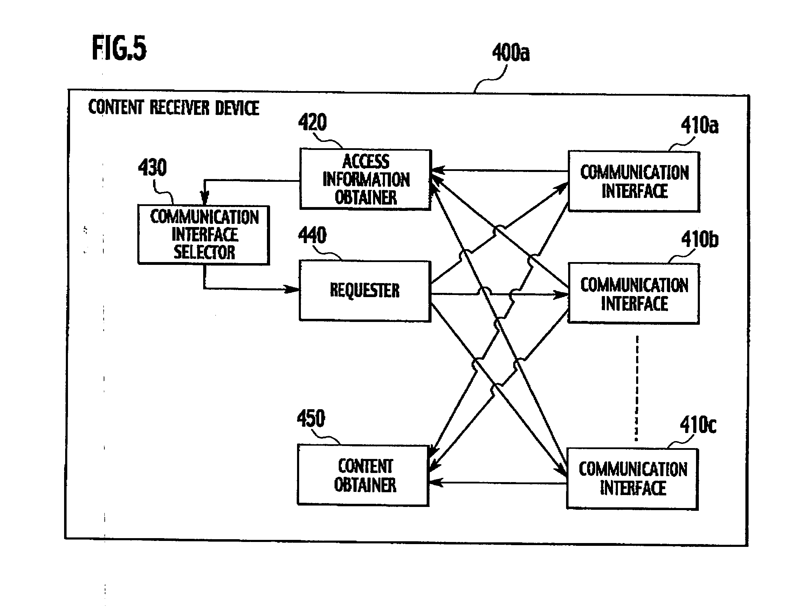

As shown in Fig. 5, the content receiver device 400a includes a plurality of communication interfaces 410a to 410c, an access information obtainer 420, a communication interface selector 430, a requester 440 and a content obtainer 450. The communication interfaces 410a to 410c are a plurality of communication interfaces corresponding to the access networks 300a to 300c respectively. The plurality of access networks 300a to 300c are, for example, the third generation mobile network and a wireless LAN (IEEE802.11). The access information obtainer 420 obtains access information from the communication controller 100a. The access information obtainer 420 obtains access information from the communication controller 100a through the network 200, through any one of the access networks 300a to 300c, and through any one of the communication controller 410a to 410c.

The communication interface selector 430 selects a communication interface corresponding to one of the access networks specified by the access network specification information included in the access information which has been obtained by the access information obtainer 420. The requester 440 requests content through the communication interface which has been selected by the communication interface selector 430, based on reference information included in the access information. The content obtainer 450 obtains the content through the communication interface which has been selected by the communication interface selector 430. In this manner, the communication interface selector 430, the requester 440 and the content obtainer 450 altogether function as a service information obtainer for obtaining the content through the access network to be specified by use of the access network specification information included in the access information which has been obtained by the access information obtainer 420.

### (ACCESS INFORMATION GENERATING METHOD)

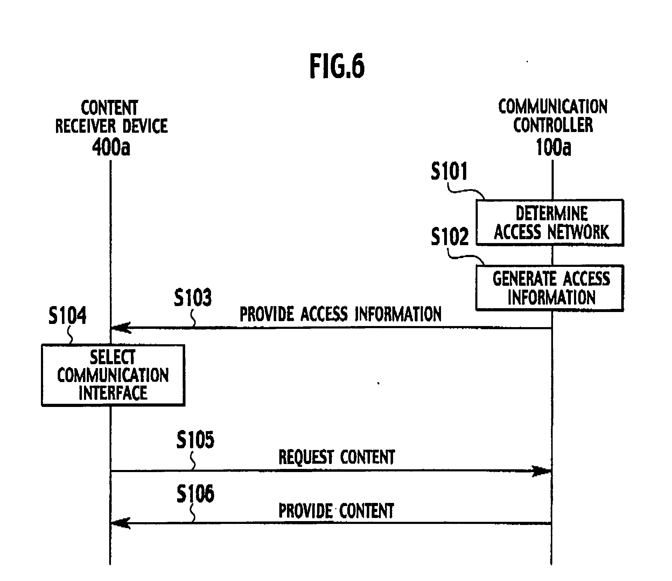

With reference to Fig. 6, descriptions will be provided for an access information generating method employing the communication system 1 shown in Fig. 1. The communication controller 100a determines an access network to be used by the content receiver device 400a receiving content (S101). The communication controller 100a generates access information including reference information for specifying the content and access network specification information of the access network which has been determined in step 101 (S102). In this occasion, the communication controller 100a stores the generated access information in the access information storage unit 114. The communication controller 100a provides the access information to the content receiver device 400a (S103).

The content receiver device 400a selects a communication interface corresponding to an access network to be specified by an access network specification information which is included in the access information (S104). Through the communication interface thus selected, the content receiver device 400a requests the communication controller 100a to provide the content (S105). In response to the request, the communication controller 100a provides the content to the content receiver device 400a (S106).

### (EFFECTS)

According to the communication controller 100a and the access information generating method in the present embodiment, the determiner 111 determines an access network to be used by the content receiver device 400a receiving content. The generator 112 generates access information including access network specification information for specifying the access network thus determined. Thereby, the access network specification information constitutes a part of the access information. In addition, such a communication controller 100a is included in the server system. This enables the server system to easily specify to the content receiver device 400a the access network to be used by the content receiver device 400a receiving content. In addition, the communication controller 100a includes the access information provider 113 for providing access information to the content receiver device 400a. This enables the communication controller 100a to provide the access network specification information to the content receiver device 400a.

In particular, the determiner 111 determines an access network on a basis of content attribute information. In this manner, the determiner 111 determines the access network to be used by the content receiver device 400a receiving content, on a basis of the content attribute information. This enables the server system to specify the access network to be used by the content receiver device 400a receiving content, depending on the content.

The determiner 111 may determine an access network on a basis of a volume of content. For example, if the determiner 111 were to determine an access network which has a faster communication speed, and which charges a lower communication unit price, in response to a larger volume of content, the communications controller 100a could provide the larger volume of content faster and with the communication costs checked. In addition, the determiner 111 may determine an access network based on the sales price of content and security level which is required by content. For example, if the determiner 111 were to determine an access network with a higher security level in response to content with a higher sales price and content requiring a higher security level, an unauthorized access to the content could be checked.

Alternately, the determiner 111 may determine an access network on a basis of a degree of importance of the content. For example, if the determiner 111 were to determine an access network which has a larger coverage in response to content which has a higher degree of importance, the communication would not be interrupted even when the content receiver device 400a moves in a wider range. For example, the content which has a higher degree of importance is audio content to be transmitted when the audio content and video content are simultaneously distributed. In addition, the determiner 111 may determine an access network on a basis of acceptable communication costs. This enables the communication controller 100a to control costs for distributing content in the case, for example, where the content is provided by use of a reverse charging model which charges communication costs on the communication controller 100a.

The generator 112 generates access information including access network specification information. This causes the access network specification information to be a part of the access information. In addition, the generator 112 stores the generated access information in the access information storage unit 114. This makes it easy for the server system to provide the access information to a large number of content receiver device 400a.

The generator 112 can describe the access information in association with, for example, the URL and CRID. In addition, the generator 112 can include the access information in a file which has been described by use of the HTML and SMIL. This enables the communication controller 100a to provide to the content receiver device 400a information concerning the determined access network by use of a general-purpose method. Consequently, the server system can easily specify the determined access network to the content receiver device 400a.

Furthermore, the communication controller 100a includes a content database 140 for storing reference information. In addition, the generator 112 generates access information including the reference information which has been obtained from the content database 140. In this manner, the communication controller 100a can store the reference information. This makes it easy for the communication controller 100a to generate access information.

In addition, the content database 140 also stores content attribute information. This makes it easy for the determiner 111 to take the content attribute information into consideration when the determiner 111 is intended to determine an access network to be used by a content receiver device 400a receiving content.

Furthermore, the content database 140 also stores content. In addition, the communication controller 100a includes a content provider 130. The content provider 130 provides content in response to a request from the content receiver device 400a based on the access information. This enables the communication controller 100a to provide content to the content receiver device 400a. Consequently, the communication controller 100a can function as the server system in which the communication controller 100a provides content by itself.

Moreover, in the content receiver device 400a according to the present embodiment, the access information obtainer 420 obtains access information from the communication controller 100a. In addition, the requester 440 requests content through an access network to be specified by access network specification information which is included in the access information. Furthermore, the access information obtainer 420 obtains content through a communication interface corresponding to the access network. This enables the content receiver device 400a to receive the content by use of the access network to be specified by the server system.

### (SECOND EMBODIMENT)

### (COMMUNICATION SYSTEM)

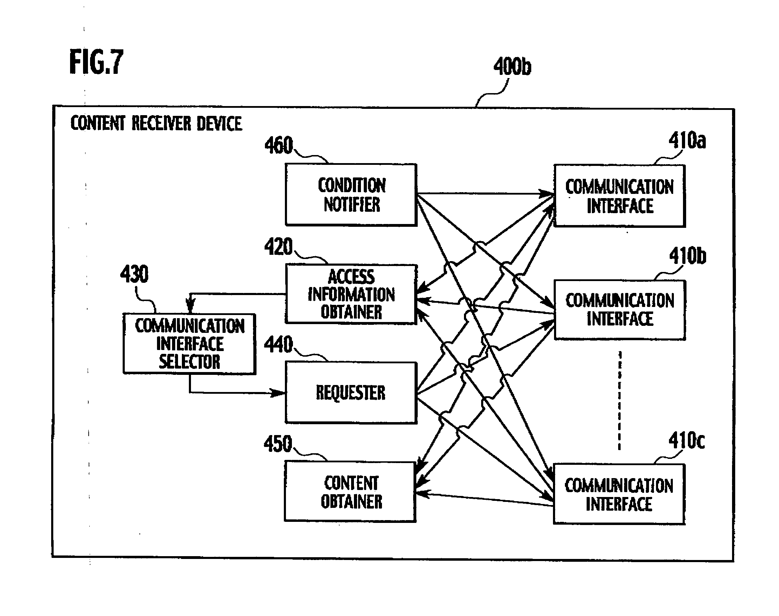

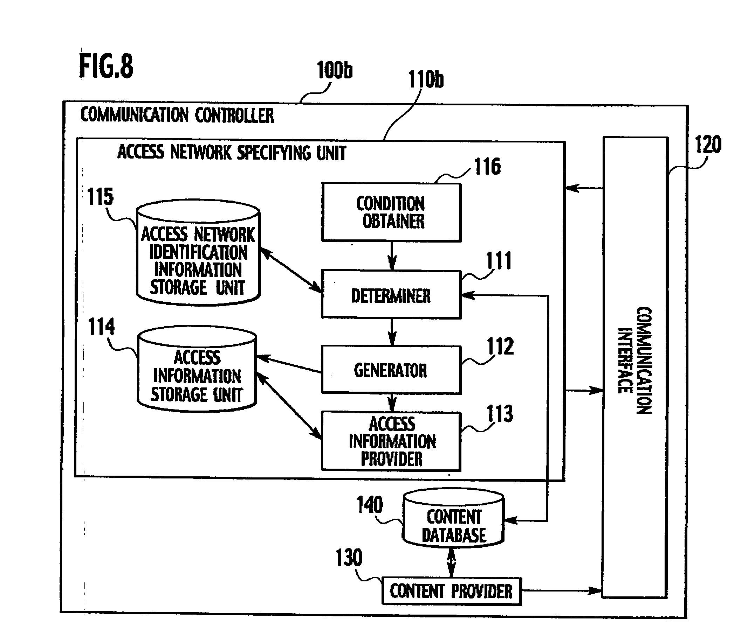

A communication system according to the present embodiment includes a communication controller 100b shown in Fig. 8 and a content receiver device 400b shown in Fig. 7 in lieu of the communication controller 100a and the content receiver device 400a of the communication system 1 shown in Fig. 1. The content receiver device 400b in the communication system according to the present embodiment notifies the communication controller 100b of a condition on the receiver device including at least one of a specification for specifying an access network, which the content receiver device 400b is capable of using, and a specification for specifying an access network, which the content receiver device 400b requests to be used for receiving content. The access network which the content receiver device 400b requests to be used for receiving content also includes an access network which a user of the content receiver device 400b wishes to use.

The content receiver device 400b notifies the communication controller 100b of a condition on the receiver device by use of, for example, an HTTP protocol. The communication controller 100b obtains the condition on the receiver device, and takes into consideration at least one of the capability and the request of the content receiver device 400b, thereby determining an access network to be used by the content receiver device 400b receiving content.

Detailed descriptions will be provided below for the communication controller 100b and the content receiver device 400b. As shown in Fig. 7, the content receiver device 400b includes a plurality of communication interfaces 410a to 410c, an access information obtainer 420, a communication interface selector 430, a requester 440, a content obtainer 450 and the condition notifier 460. Incidentally, the same or similar reference numerals are applied to the same or similar parts and elements as Fig. 3A or Fig. 3B has, and descriptions of the same or similar parts and elements will be omitted.

The condition notifier 460 notifies the communication controller 100b of a condition on the receiver device. The condition notifier 460 notifies the communication controller 100b of a condition on the receiver device through any one of the communication interfaces 410a to 410c corresponding to the available access networks 300a to 300c. The content receiver device 400b can include in the condition on the receiver device a specification for specifying an access network which the content receiver device 400b is capable of using. For example, the content receiver device 400b notifies that the content receiver device can use the third generation mobile network and a wireless LAN.

In addition, the condition notifier 460 can include in a condition on the receiver device a specification for specifying an access network which the content receiver device 400b requests to be used for receiving content.

The condition notifier 460 can specify a condition on the receiver device in the following manner, for example. The condition notifier 460 specifies a condition on the receiver device by identifying an access network, which the content receiver device 400b requests to be used, by use of any one of an ID and a type of the access network. The condition notifier 460 may specify a plurality of access networks in the same manner. In addition, the condition notifier 460 may specify a plurality of access networks with priority given to the plurality of access networks. For example, when a user who operates the content receiver device 400b wishes to use a secure access network, the condition notifier 460 specifies an access network with higher priority given to the third generation mobile network than a wireless LAN. The condition notifier 460 can notify the condition on the receiver device including a priority rating, for example, by transmitting to the communication controller 100b a file in which the third generation mobile network is described prior to the wireless LAN. Furthermore, the condition notifier 460 can also specify an access network, which the content receiver device 400b requests to be used, by use of the condition of an access network. A specification to be made by use of the condition of an access network means a specification of an access network whose predetermined properties satisfies a desired condition such as "an access network whose communication costs are the lowest," and "an access network through which communication can be carried out at a higher security level than a certain security level."

As shown in Fig. 8, the communication controller 100b includes an access network specification unit 110b, a communication interface 120, a content provider 130 and a content database 140. In addition, the access network specification unit 110b includes a determiner 111, a generator 112, an access information provider 113, an access information storage unit 114, an access network identification information storage unit 115 and a condition obtainer 116. Incidentally, the same or similar reference numerals are applied to the same or similar parts and elements as the configuration of Fig. 2 has, and descriptions of the same or similar parts and elements will be omitted.

The condition obtainer 116 obtains a condition on the receiver device. The condition obtainer 116 obtains a condition on the receiver device from the content receiver device 400b. The determiner 111 takes into consideration the condition on the receiver device which has been obtained by the condition obtainer 116, and determines an access network to be used by the content receiver device 400b receiving content. For example, the condition obtainer 116 obtains a condition on the receiver device including a specification for specifying an access network which the content receiver device 400b is capable of using. In this case, the determiner 111 determines an access network to be used by the content receiver device 400b out of the access networks which the content receiver device 400b is capable of using.

Alternately, the condition obtainer 116 obtains a condition on the receiver device including a specification for specifying an access network which the content receiver device 400b wishes to use. The condition on the receiver device is specified, for example, by identifying a plurality of access networks, which the content receiver device 400b requests to be used, by use of any one of an ID or a type of the access network. In the case where the condition obtainer 116 has received such a condition on the receiver device, the determiner 111 determines an access network which satisfies the condition which the communication controller 100b requests out of the specified access networks. In addition, in the case where the condition obtainer 116 has received a condition on the receiver device including a priority rating, the determiner 111 determines an access network which satisfies the highest condition listed in the priority rating, out of access networks which satisfy the priority rating which the communication controller 100b requests. In the case where the condition obtainer 116 has received a condition on the receiver device including a specification for specifying an access network by use of the condition of an access network, the determiner 111 takes into consideration both a condition requested by the communication controller 100b and the condition on the receiver device, and determines an access network. If there is an access network which satisfies both the condition requested by the communication controller 100b and the condition on the receiver device, the determiner 111 determines the access network. If there is no such access network, determiner 111 may input into the generator 112 the access network identification information concerning no access network.

The generator 112 generates access information, in common with the generator 112 according to the first embodiment. However, if the generator 112 obtains the access network identification information concerning no access network, the generator 112 may not generate access information. And the generator 112 may input an error message into the access information provider 113. Then the access information provider 118 may provide the content receiver device 400b the error message instead of access information.

### (ACCESS INFORMATION GENERATING METHOD)

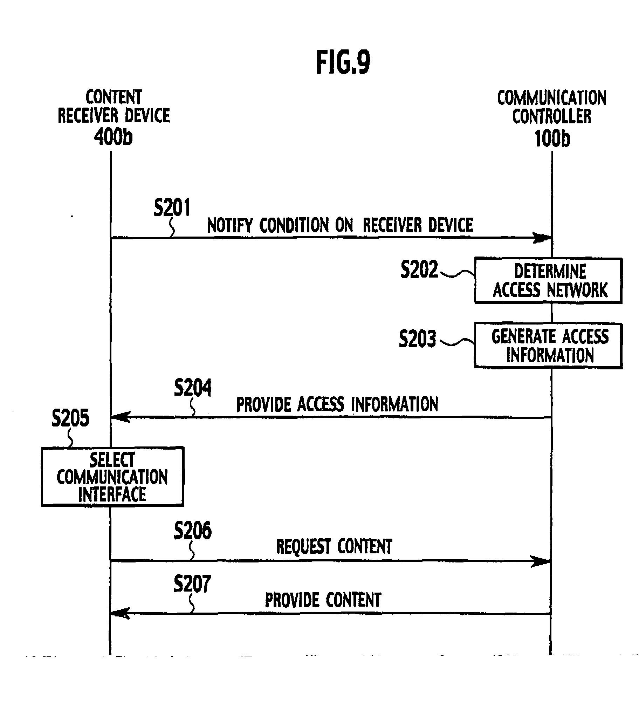

With reference to Fig. 9, descriptions will be provided for access information generating method to be carried out by a communication system employing the communication controller 100b and the content receiver device 400b.

The content receiver device 400b notifies the communication controller 100b of a condition on the receiver device (S201). The communication controller 100b takes the received condition on the receiver device into consideration, and determines an access network (S202). Subsequently, steps S203 to S207 are performed. Steps S203 to S207 are the same as steps S102 to S106 shown in Fig. 6.

### (EFFECTS)

The communication controller 100b, the access information generating method and the content receiver device 400b according to the present embodiment bring about the following effects in addition to the effects which can be obtained from the communication controller 100a and the content receiver device 400a according to the first embodiment. The content receiver device 400b includes a condition notifier 460 for notifying the communication controller 100b of a condition on the receiver device. This enables the condition notifier 460 to notify the communication controller 100b of a condition on the receiver device. Accordingly, content receiver device 400a is able to have the server system specify an access network with a request from the content receiver device 400b also taken into consideration.

In addition, the communication controller 100b includes a condition obtainer 116 for obtaining a condition on the receiver device. Further, on a basis of a condition on the receiver device which has been obtained by the condition obtainer 116, the determiner 111 determines an access network to be used by the content receiver device 400b receiving content.

For this reason, in the case where a condition on the receiver device includes a specification for specifying an access network which the content receiver device 400b is capable of using, the determiner 111 can determine an access network which the content receiver device 400b is necessarily capable of using. In addition, in the case where a condition on the receiver device includes a specification for specifying an access network which the content receiver device 400b requests to be used for receiving content, the determiner 111 can take into consideration not only the request from the server system but also the request from the content receiver device 400b, thereby enabling the determiner 111 to determine an access network to be used by the content receiver device 400b. In addition, the sever system can obtain a condition on the receiver device of the content receiver device 400b whenever necessary. Thereby, even if the communication controller 100b does not maintain a condition on the receiver device from the content receiver device 400b, the communication controller 100b can comprehend the condition on the receiver device from the content receiver device 400b.

### (THIRD EMBODIMENT)

### (COMMUNICATION SYSTEM)

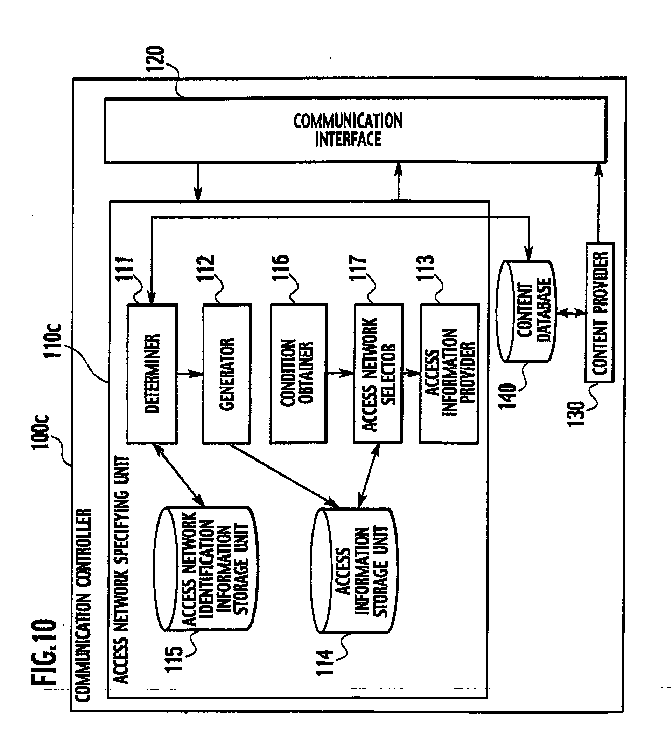

A communication system according to the present embodiment includes a communication controller 100c shown in Fig. 10 and a content receiver device 400b shown in Fig. 7 in lieu of the communication controller 100a and the content receiver device 400a of the communication system 1 shown in Fig. 1. The communication controller 100c generates access information in response to content in advance. Furthermore, from the content receiver device 400b, the communication controller 100c obtains a condition on the receiver device. Subsequently, the communication controller 100c takes a request from the content receiver device 400b into consideration, and specifies one of the access networks on a basis of access network specification information which has been generated in advance.

Detailed descriptions will be provided below for the communication controller 100c and the content receiver device 400b. As shown in Fig. 10, the communication controller 100c includes an access network specification unit 110c, a communication interface 120, a content provider 130 and a content database 140. In addition, the access network specification unit 110c includes a determiner 111, a generator 112, an access information provider 113, an access information storage unit 114, an access network identification information storage unit 115, a condition obtainer 116 and an access network selector 117. Incidentally, the same or similar reference numerals are applied to the same or similar part and elements as Fig. 8 has, and descriptions of the same or similar parts and elements will be omitted.

The determiner 111 determines an access network to be used by the content receiver device 400b receiving content, in common with the determiner 111 according to the first embodiment. However, since the communication controller 100c includes the access network selector 117, the determiner 111 may determine a plurality of access networks. In addition, the determiner 111 may determine access networks to be used by the content receiver device 400b receiving content on a basis of a condition of an access network. The determination of access networks on a basis of a condition of an access network means determination of an access network whose predetermined properties satisfy a desired condition, for example, such as "an access network whose communication costs are the lowest," and "an access network through which communications can be carried out at a higher security level than a certain security level." However, in the case where the determiner 111 has determined access networks in this manner, the communication controller 100c has to have the function of selecting an access network which satisfies the condition. The generator 112 generates access information including a plurality of access networks thus determined or a condition of an access network. The generator 112 stores this access information into the access information storage unit 114, in common with the generator 112 according to the first embodiment.

From the content receiver device 400b, the condition obtainer 116 obtains a condition on the receiver device, in common with the condition obtainer 116 according to the second embodiment. The access network selector 117 makes reference to the access information which has been stored in the access information storage unit 114, and thereby selects an access network which satisfies the condition on the receiver device, which has been obtained by the condition obtainer 116. In this occasion, in the case where the access information specifies a plurality of access networks, the access network selector 117 selects a single access network, which satisfies the condition on the receiver device, out of the plurality of access networks. Furthermore, in the case where a condition of an access network is specified in the access information, the access network selector 117 selects an access network which satisfies both the condition of an access network included in the access information and the condition on the receiver device. If there is no such access network, the access network selector 117 may delete the access information stored in the access information storage unit 114. The selector may input an error message into the access information provider 113. Then the access information provider 113 may provide the content receiver device 400b with the error message instead of access information.

### (ACCESS INFORMATION GENERATING METHOD)

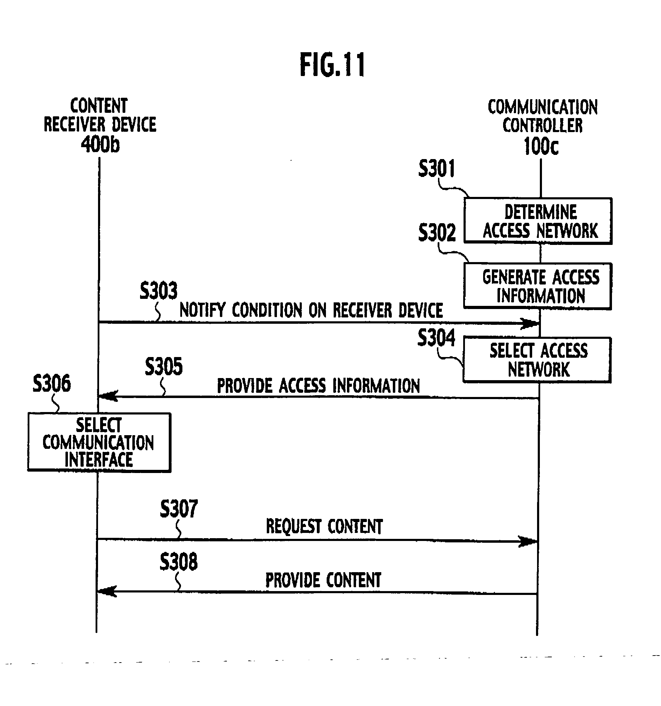

With reference to Fig. 11, descriptions will be provided for an access information generating method to be carried out by a communication system employing the communication controller 100c and the content receiver device 400b. First of all, in common with the communication controller 100a of Fig. 6, the communication controller 100c generates access information (S301). In this occasion, however, the communication controller 100c determines a plurality of access networks or a condition of an access network, instead of selecting a single access network. Subsequently, the communication controller 100c generates access information including access network specification information for specifying the plurality of access networks thus determined or the condition which the access network should satisfy (S302). In this occasion, the communication controller 100c stores the access information thus generated. The content receiver device 400b notifies the communication controller 100c of a condition on the receiver device (S303). The communication controller 100c takes into consideration the condition on the receiver device thus obtained, and additionally makes reference to the stored access information, thereby selecting a single access network (S304). Subsequently, steps S305 to S308 are performed. Steps S305 to S308 are the same as steps S103 to S106 shown in Fig. 6.

### (EFFECTS)

The communication controller 100c, the access information generating method and the content receiver device 400b according to the present embodiment bring about the following effects in addition to the effects which can be obtained from the communication controller 100b and the content receiver device 400b according to the second embodiment. The generator 112 generates access information including a plurality of access networks or a condition of an access network in advance. In addition, from the content receiver device 400b, the receiver device conditions obtainer 116 obtains a condition on the receiver device, in common with the communication controller 100b according to the second embodiment. This enables the service system to specify an access network with a request from the content receiver device 400b taken into consideration, in common with the second embodiment. Furthermore, in the case where the server system provides content to a multitude of content receiver devices, too, the server system can easily specify an access network to be used by the content receiver devices 400b receiving content.

### (FORTH EMBODIMENT)

### (COMMUNICATION SYSTEM)

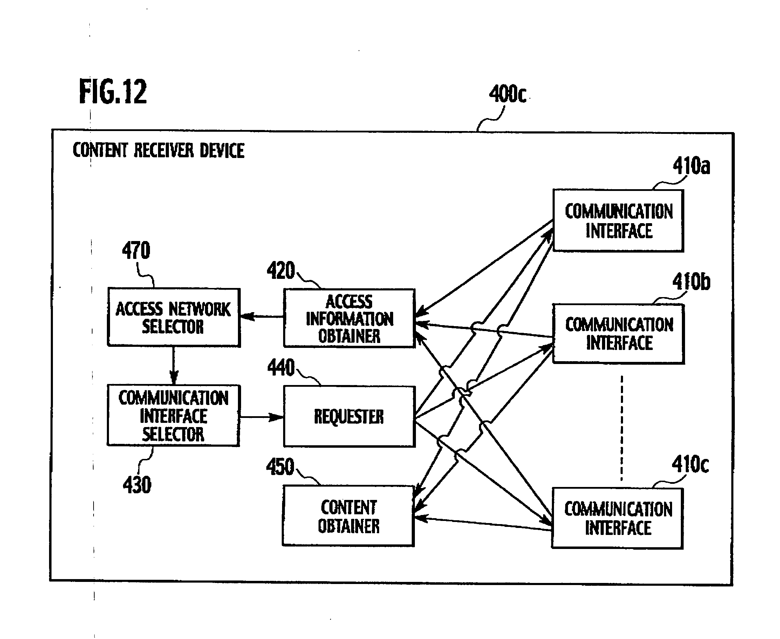

A communication system according to the present embodiment includes a content receiver device 400c shown in Fig. 12 in lieu of the content receiver device 400a of the communication system 1 shown in Fig. 1. According to the present embodiment, a communication controller 100a specifies not a single, but a plurality of, access networks to be used by the content receiver device 400c. Alternately, the communication controller 100a specifies an access network to be used by the content receiver device 400c, on a basis of a condition. The content receiver device 400c determines an access network which satisfies a condition of specifying an access network thus specified.

Detailed descriptions will be provided below for the content receiver device 400c. As shown in Fig. 12, the content receiver device 400c includes a plurality of communication interfaces 410a to 410c, an access information obtainer 420, a communication interface selector 430, a requester 440, a content obtainer 450 and an access network selector 470. Incidentally, the same or similar reference numerals will be applied to the same or similar parts and elements as the configuration of Fig. 7 has, and descriptions of the same or similar parts and elements will be omitted.

The communication controller 100a generates access information, in common with the communication controller 100a according to the second embodiment. However, since the content receiver device 400c includes the access network selector 470, the determiner 111 determines not a single access network but a plurality of access networks. Alternately, the determiner 111 determines an access network to be used by the content receiver device 400c, on a basis of a condition. Thereby, the access information includes access network specification information for specifying the plurality of access networks or a condition for an access network.

The access information obtainer 420 obtains the access information through any one of the communication interfaces 410a to 410c, in common with the access information obtainer 420 according to the first embodiment. The access network selector 470 makes reference to the access network specification information included in the access information which has been obtained by the access information obtainer 420, and determines an access network to be used. In the case where the access network specification information includes a specification for specifying a plurality of access networks, the access network selector 470 selects an access network which the content receiver device 400c requests to be used, out of the plurality of access networks. Furthermore, in the case where a condition for an access network is specified in the access network specification information, the access network selector 470 selects an access network which satisfies the condition for the access network, out of access networks which the content receiver device 400c is capable of using. The access network selector 470 inputs access information including access network specification information specifying the access network selected into the communication interface selector 430.

If there is no access network, which satisfies the condition for the access network and the content receiver device 400c is capable of using, the access network selector 470 may inform the requester 440 about that by providing access information including access network specification information specifying no access network or an error message through the communication interface selector 430. Then the requester 440 may abort requesting the content.

### (ACCESS INFORMATION GENERATING METHOD)

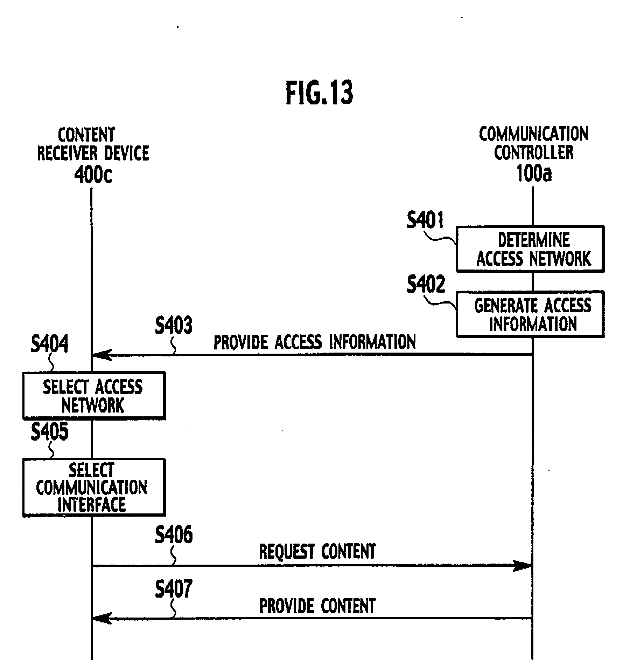

With reference to Fig. 13, descriptions will be provided for an access information generating method to be carried out by a communication system employing the communication controller 100a and the content receiver device 400c. First of all, the communication controller 100a determines an access network to be used by the content receiver device 400c (S401). In this occasion, the communication controller 100a determines not a single but a plurality of access networks to be used by the content receiver device 400c receiving content. Alternately, the communication controller 100a determines a condition for an access network. Subsequently, steps S402 and S403 are performed. Steps S402 and S403 are the same as steps S102 and S103 shown in Fig. 6. The content receiver device 400c determines an access network to be used, on a basis of the access network specification information included in the access information, and taking a request of the content receiver device 400c itself into consideration. Subsequently, steps S405 to S407 are performed. Steps S405 to S407 are the same as steps S104 to S106 shown in Fig. 6.

### (EFFECTS)

The communication controller 100a, the access information generating method and the content receiver device 400c according to the present embodiment bring about the following effects in addition to the effects which are brought about by the communication controller 100b and the content receiver device 400b according to the second embodiment. The content receiver device 400c includes an access network selector 470 for selecting an access network to be used by the content receiver device 400c. This enables the communication system to provide the content receiver device 400c with latitude to select an access network. In addition, the content receiver device 400c can receive content by use of an access network which has been determined by taking into consideration requests from both the server system and the content receiver device 400c, without notifying the communication controller 100a of a condition on the receiver device, in common with the content receiver device 400b according to the second embodiment. (FIFTH EMBODIMENT)

### (COMMUNICATION SYSTEM)

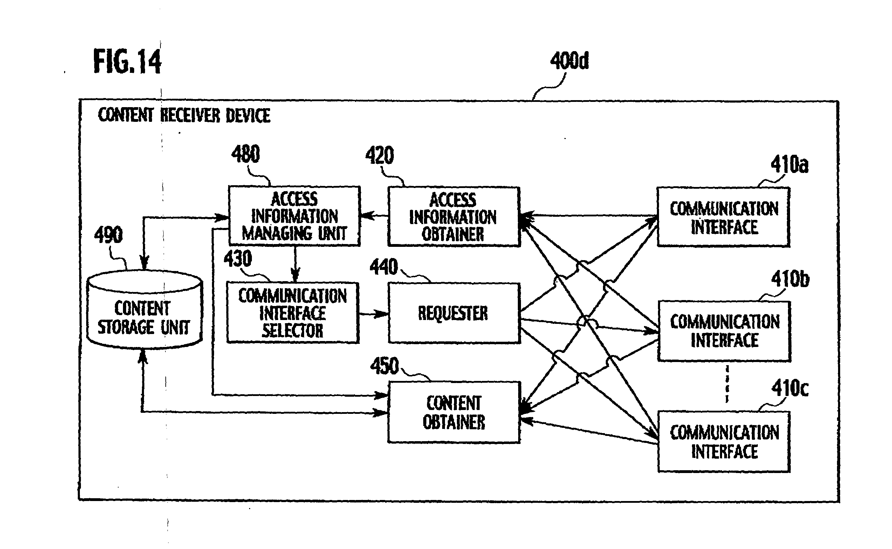

A communication system according to the present embodiment includes a content receiver device 400d shown in Fig. 14 in lieu of the content receiver device 400a shown in Fig. 1. The content receiver device 400d stores content which have been received. In addition, the content receiver device 400d does not receive all of the content through any one of the access networks 300a to 300c and through the network 200, but also uses content which have been stored in the content receiver device 400d.

Detailed description will be provided below for the content receiver device 400d. As shown in Fig. 14, the content receiver device 400d includes a plurality of communication interface 410a to 410c, an access information obtainer 420, a communication interface selector 430, a requester 440, a content obtainer 450, an access information managing unit 480 and a content storage unit490. Incidentally, the same or similar reference numerals will be applied to the same or similar parts and elements as the configuration of Fig. 5 has, and descriptions of the same or similar parts and elements will be omitted.

The content storage unit 490 stores content, content attribute information and reference information for identifying the content. The access information managing unit 480 obtains access information which has been obtained by the access information obtainer 420. In addition, the access information managing unit 480 checks whether or not content specified by the access information agrees with any one of a plurality of content which have been stored in the content storage unit 490. In this occasion, the access information managing unit 480 performs the check by comparing content attribute information included in the access information with content attribute information stored in the content storage unit 490, as well as reference information for identifying content included in the access information with reference information stored in the content storage unit 490. In the case where the content storage unit 490 stores content whose content attribute information and reference information are the same as those included in the access information, the access information managing unit 480 notifies the content obtainer 450. The content obtainer 450 obtains the content from the content storage unit 490.

In contrast, in the case where there are no content which agree with those which have been stored by the content storage unit 490, the access information managing unit 480 stores the access information into the content storage unit 490. Furthermore, the requester 440 requests content, in common with the content receiver device 400a shown in Fig.5. The content obtainer 450 obtains content through one of interfaces 410a to 410c which has been selected by the communication interface selector 430. The content obtainer 450 associates the content thus obtained with the access information which has been stored in the access information managing unit 480, and thereafter stores the content into the content storage unit 490. Incidentally, the access information managing unit 480 may store a hash value of the access information. In this case, the access information managing unit 480 can inspect content in the content storage unit 490 by use of a hash value of the obtained access information and a hash value which has been stored in the content storage unit 490.

### (ACCESS INFORMATION GENERATING METHOD)

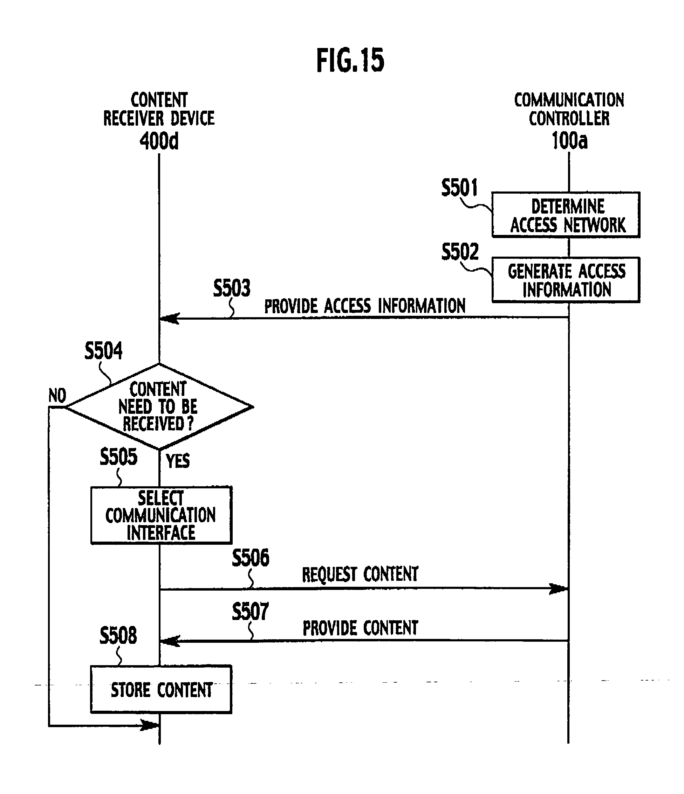

With reference to Fig. 15, descriptions will be provided for an access information generating method to be carried out by a communication system employing the communication controller 100a and the content receiver device 400d. First of all, the communication controller 100a performs steps S501 to S503. Steps S501 to S503 are the same as steps S101 to S103 shown in Fig. 6. The content receiver device 400d checks whether or not content, which is the same as content specified by the obtained access information, has been stored in the content receiver device 400d. By this, the content receiver device 400d determines whether or not the content receiver device 400d needs to receive the content from the communication controller 100a (S504). In the case where the content receiver device 400d has not stored, the content specified by the access information, the content receiver device 400d stores the access information. Subsequently, steps S505 to S507 are performed. Steps S505 to S507 are the same as steps S104 to S106 shown in Fig. 6. Subsequently, the content receiver device 400d stores the content which has been received (S508). In addition, in the case where the content receiver device 400d determines in step S504 that the content need not be received, the content receiver device 400d uses the content which have been stored in the content receiver device 400d, instead of requesting the content.

### (EFFECTS)

The communication controller 100a, the access information generating method and the content receiver device 400d according to the present embodiment bring about the following effects in addition to the effects which are obtained from the communication controller 100a and the content receiver device 400a according to the first embodiment. The content receiver device 400d includes a content storage unit 490 for storing content which have been obtained. In addition, the content obtainer 450 stores the obtained content in the content storage unit 490. Furthermore, the access information managing unit 480 checks whether or not the content storage unit 490 has stored the content which is the same as the content specified by the access information. Subsequently, only in the case where the access information managing unit 480 judges that the content storage unit 490 has not stored it, the requester 440 requests to the communication controller 100a the content. Consequently, the content receiver device 400d obtains only content which has not been stored, through one of the access networks 800a to 300c and through the network 200. This enables the content receiver device 400d to save network resources. In addition, the content receiver device 400d checks on the content storage unit 490 by use of a hash value, thereby enabling the content receiver device 400d to check by use of a fewer memories whether or not the content storage unit 490 has stored the content which is the same as the content to be specified by the access information.

### (MODIFICATIONS)

It should be noted that the present invention is not limited to the aforementioned embodiments, and that various modifications can be carried out. For example, the communication controller 100a may provide access information to another communication controller 100a through a communication interface 120. In this case, the communication controller 100a can provide another communication controller 100a with access information to be used for receiving content which has been stored in the content database 140.

In addition, the communication controller 100a may include a function of obtaining reference information concerning content from another device, which has stored content, the reference information concerning the content and the attribute information concerning the content, through the communication interface 120. Furthermore, the communication controller 100a may additionally obtain the attribute information concerning the content. In this case, the communication controller 100a can generate access information depending on attribute information concerning content which has not been stored in the content database 140. Moreover, the communication controller 100a can also provide the access information thus generated to another communication controller.

Each of the communication controllers 100a to 100c includes the access information provider 113, the content database 140 and the content provider 130 in addition to the determiner 111 and the generator 112. However, as long as each of the communication controllers 100a to 100c includes at least the determiner 111 and the generator 112, the communication controller can function as an access information generating device for generating access information. In addition, each of the communication controllers 100a to 100c can generate and provide access information, if the communication controller includes the access information provider 113 in addition to the determiner 111 and the generator 112. Moreover, each of the communication controllers 100a to 100c can generate access information and provide content, if the communication controller includes the content provider 130 and the content database 140 in addition to the determiner 111 and the generator 112.

Additionally, the server system can specify an access network by use of the URL and the CRID which are widely used. Consequently, the server system can provide access information to a general-purpose device. Accordingly, if a general-purpose device is used as a content server for providing content, the content server can specify an access network to be used by the content receiver device 400a for receiving content. This enables a distributed server environment to be built up by use of a general-purpose device.

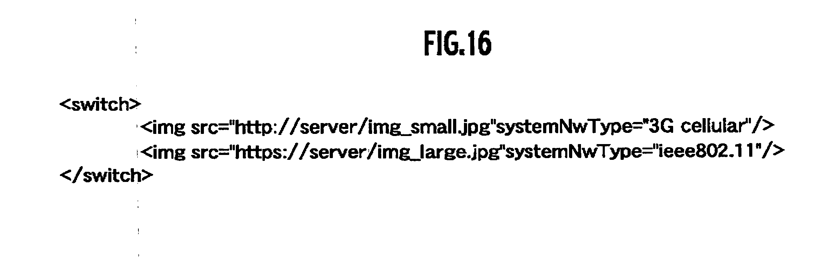

Moreover, in the fourth embodiment, when the determiner 111 determines a plurality of access networks, the generator 112 may generate access information in which each of the plurality of access networks is associated respectively with each of the different sets of reference information. In this case, the access network selector 470 makes reference to access network specification information included in the access information which has been obtained by the access information obtainer 420, and thereby selects an access network to be used by the content receiver device 400c. Subsequently, the requester 440 makes reference to the reference information to be associated with the access network, which has been selected, in the access information, and thereby requests content. Fig. 16 shows an example of a description of access information, in which each of a plurality of access networks is associated with different URL address, by use of a switch function of the SMIL. In the case where the content receiver device 400c is a third generation cellular terminal, the access network selector 470 selects an access network which has been specified as <systemNwType="3Gcellular">. Consequently, the requester 440 makes reference to a URL address described as <http://server/img_small.jpg>, and thereby requests content. On the other hand, in the case where the content receiver device 400c is a terminal device of a wireless LAN, the access network selector 470 selects an access network which has been specified as <systemNwType="ieee802.11">. Consequently, the requester 440 makes reference to a URL address described as <https://server/img_large.jpg>, and thereby requests content by use of the SSL (Secure Socket Layer).

In the case where the content receiver device 400c is going to receive content through the third generation cellular network, which is a secure network, in this manner, the content receiver device 400c receives content by use of a regular HTTP. In contrast, in the case where the content receiver device 400c is going to receive content through an access network, such as a wireless LAN, which is not secure, the content receiver device 400c receives content by use of the SSL. This enables the content receiver device 400c to receive content in an optimal way depending on the communication interfaces 410a to 410c which have been included in the content receiver device 400c.

In all of the embodiments, the generator 112 obtains reference information through the determiner 111. However, the generator 112 may obtain reference information directly from the content database 140. In this case, the determiner 111 does not have to obtain reference information for identifying content from the content database 140.

Incidentally, there needs to be a plurality of access networks. Two access networks are acceptable, and four or more access networks are also acceptable.

## Claims

1. An access information generating device included in a server system providing service information, comprising:
a determiner configured to determine an access network to be used by a receiver device receiving the service information; and,
a generator configured to generate access information so as to receive the service information, wherein the access information includes access network specification information, which specifies the access network determined by the determiner, and reference information, which identifies the service information.

2. The access information generating device of claim 1, wherein the determiner determines the access network based on attribute information of the service information.

3. The access information generating device of claim 1, further comprising:
a condition obtainer configured to obtain a condition on the receiver device including at least one of a specification specifying the access network, which
the receiver device is capable of using for receiving the service information, and a specification specifying the access network, which the receiver device requests for use to receive a service information,
wherein the determiner determines the access network based on a condition on the receiver device obtained by the condition obtainer.

4. The access information generating device of claim 1, further comprising:
a storage configured to store the reference information,
wherein the generator generates the access information including the reference information obtained from the storage.

5. A method to be executed by a server system providing service information for generating an access information, comprising:
determining an access network to be used by a receiver device receiving the service information; and,
generating access information so as to receive the service information,
wherein the access information includes access network specification information, which specifies the determined access network, and reference information, which identifies the service information.

6. A receiver device, comprising:
a plurality of communication interfaces corresponding to a plurality of access networks; and,
an access information obtainer configured to obtain access information so as to receive service information from a server system providing the service information, wherein the access information includes access network specification information, which specifies the access network to be used for receiving the service information, and reference information, which identifies the service information; and,
a service information obtainer configured to obtain the service information via the access network specified by the access network specification information included in the access information obtained by the access information obtainer.

7. The receiver device of claim 6, further comprising:
a notifier configured to notify the server system of a condition on the receiver device including at least one of a specification specifying the access network, which the receiver device is capable of using for receiving the service information and a specification specifying the access network, which the receiver device requests for use to receive the service information.
